(19) Europäisches Patentamt
European Patent Office
Office européen des brevets

(11) **EP 2 089 252 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(21) Anmeldenummer: **07820065.6**

(22) Anmeldetag: **07.09.2007**

(51) Int Cl.:
***B60R 21/013*** *(2006.01)*   ***B60R 21/015*** *(2006.01)*

(86) Internationale Anmeldenummer:
**PCT/EP2007/059405**

(87) Internationale Veröffentlichungsnummer:
**WO 2008/046692 (24.04.2008 Gazette 2008/17)**

(54) **VERFAHREN UND VORRICHTUNG ZUR ANSTEUERUNG VON PERSONENSCHUTZMITTELN SOWIE EIN ENTSPRECHENDES COMPUTERPROGRAMM UND COMPUTERPROGRAMMPRODUKT**

METHOD AND DEVICE FOR ACTIVATING PASSENGER PROTECTION MEANS, AND A CORRESPONDING COMPUTER PROGRAM AND COMPUTER PROGRAM PRODUCT

PROCÉDÉ ET DISPOSITIF POUR LA COMMANDE DE MOYENS DE PROTECTION DE PERSONNES AINSI QUE PROGRAMME INFORMATIQUE CORRESPONDANT ET PRODUIT DE PROGRAMME INFORMATIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.10.2006 DE 102006048907**

(43) Veröffentlichungstag der Anmeldung:
**19.08.2009 Patentblatt 2009/34**

(73) Patentinhaber: **Robert Bosch GmbH**
**70442 Stuttgart (DE)**

(72) Erfinder:
• **KOLATSCHEK, Josef**
**71263 Weil Der Stadt (DE)**
• **BREUNINGER, Joerg**
**71282 Hemmingen (DE)**

(56) Entgegenhaltungen:
**US-A- 5 983 147     US-B1- 6 173 224**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 089 252 B1

**Beschreibung**

Stand der Technik

Die Erfindung betrifft ein Verfahren zur Ansteuerung von Personenschutzmitteln so nach der Gattung des unabhängigen Patentanspruchs.

Aus DE 103 60 893 A1 ist ein Verfahren zur Ansteuerung von Personenschutzmitteln bekannt. Dabei wird aus einem Beschleunigungssignal eine Vorverlagerung bestimmt, die mit wenigstens einem Schwellwertvergleich verglichen wird, deren Abhängigkeit von einem Geschwindigkeitsabbau und einer Verzögerung eingestellt wird. In Abhängigkeit von diesem Vergleich werden die Personenschutzmittel angesteuert.

Aus US 5,983, 147 ist eine Klassifizierung und Detektion von Fahrzeuginsassen mittels Video bekannt. Dabei werden euklidische Distanzen zwischen einem aufgenommenen Videobild und der Projektion eines Trainingsbildes bestimmt und gegebenenfalls werden diese euklidischen Distanzen gewichtet. Aus US 6, 173, 224 B1 ist ein Verfahren zur Ansteuerung von Insassenschutzmitteln und ein entsprechendes System für ein Kraftfahrzeug bekannt. Dabei wird eine Energiemomentenweilenform aus der Beschleunigung, und einer Anfangsgeschwindigkeit sowie einer Fahrzeugmasse bestimmt. Durch einen Abstandsvergleich mit sogenannten Signaturenergiemomentenwellenformen wird eine semimetrische Distanz bestimmt und die Klassifizierung erfolgt derart, dass die beobachtete Energiemomentenwellenform der Klasse zugeordnet wird, zu der die geringste semimetrische Distanz vorliegt.

Offenbarung der Erfindung

Das erfindungsgemäße Verfahren zur Ansteuerung von Personenschutzmitteln hat demgegenüber Vorteil. Es ist bekannt, dass die Ansteuerungsentscheidung mehrere auslöserelevante Messgrößen zu einem Merkmalsvektor zusammenfasst und die Auslösung dann auf einem einfachen Vergleich der Ähnlichkeit von Merkmalsvektoren beruht. Hierzu werden in einem ersten Schritt die Merkmalsvektoren aus einem Datensatz mit bekannten Crasheigenschaften (dem Trainingsdatensatz) einer für die Auslösung relevanten Klasse zugeordnet.

Verschiedene Klassen können beispielsweise verschiedene Crashschweren repräsentieren. Im zweiten Schritt können die Merkmalsvektoren ohne bekannte Crasheigenschaften durch Vergleich der Ähnlichkeit mit den im Trainingsdatensatz ermittelten Merkmalsvektoren einer entsprechenden Klasse unterzogen werden. Das erfindungsgemäße Verfahren ist mit der Einfachheit der beschriebenen Strategie der Klassenzuordnung leicht zu interpretieren und wird in der Literatur als nächste Nachbar Methode benannt. Die gute Interpretierbarkeit ist insbesondere im Vergleich zu dem hohen Applikationsaufwand bei den herkömmlichen Verfahren zur Ansteuerung von Personenschutzmitteln zu sehen, bei dem viel Expertenwissen einfließt und somit die Nachvollziehbarkeit bzw. Interpretierbarkeit leiden.

Darüber hinaus ist eine höherdimensionale Betrachtung durch die Verwendung der Merkmalsvektoren möglich, so dass eine bessere Zuordnung in Klassen ermöglicht wird. Die einzelnen Merkmale, die im Merkmalsvektor zusammengefasst sind, bestimmen durch ihre Anzahl die Dimension.

Das Ablegen der Merkmalsvektoren zusammen mit ihrer Klassenzugehörigkeit kann ohne weitere Verarbeitung der Crashdaten automatisch erfolgen. Um Ressourcen zu sparen mag es sinnvoll sein, den Satz an Crashdaten, die abgespeichert werden sollen, zu reduzieren. Auch für diese Aufgabe gibt es Methoden, die automatisch aus einer Anzahl an Crashdaten eine Untermenge von markantesten Merkmalsvektoren auswählen können. Der Aufwand an Applikation ist somit sehr niedrig.

Bei einer entsprechenden Wahl der Merkmalsvektoren kann eine Klassenzuordnung im Rahmen der physikalischen Mess- und Rechengrößen erfolgen.

Da das Messprinzip für das erfindungsgemäße Verfahren, insbesondere die Klassifizierung unerheblich ist, können auf einfache Weise Daten verschiedener Sensoren mit unterschiedlichen physikalischen Messgrößen auf eine einheitliche Weise fusioniert werden. Zu diesen Messgrößen gehören die Beschleunigung, der Druck, der Körperschall, Magnetfelderströme, Umfelddaten und andere mögliche Messgrößen.

Bekannt ist die Verwendung eines Abstandsmaßes, um einen Merkmalsvektor zu klassifizieren. Dabei wird der Abstand zu einem Trainingsdatensatz verwendet. In Abhängigkeit von diesem Vergleich kann dann eine Klassifizierung des Merkmalsvektors erfolgen und aufbauend auf diese Klassifizierung kann dann die Ansteuerungsentscheidung ausgegeben werden.

Wie oben bereits ausgeführt, kann als Unfallsensorik eine Vielzahl von Sensoren oder auch nur ein Typ von Sensoren verwendet werden.

Die Merkmale, die von dem wenigstens einen Signal der Unfallsensorik abgeleitet werden, sind beispielsweise das Beschleunigungssignal, die Vorverlagerung, die integrierte Beschleunigung, statistische Daten, Absolutwerte, ein Abstand zu einem möglichen Aufprallobjekt, ein Drucksignal, ein Körperschallsignal und auch ein Sitzbelegungssignal. Andere Möglichkeiten sind gegeben. Der Merkmalsvektor definiert dann in einem n-dimensionalen Raum, je nach Dimension des Merkmalsvektors, einen Punkt. Zur Klassifizierung werden dann die Abstände dieses Punkts zu den Punkten eines jeden Merkmalsvektors aus dem Trainingsdatensatz bestimmt. Weiter unten sind verschiedene Möglichkeiten angegeben, wie Trainingsdatensatz und Astandsmaß beschaffen sein können. Die Klassifizierung erfolgt nach der Bestimmung der Abstände zum abgespeicherten Trainingsdatensatz und sagt beispielsweise etwas über den Crashtyp, über die Crashschwere und damit darüber etwas aus, über welche Personenschutzmittel angesteuert werden müssen.

Eine Vorrichtung weist neben der wenigstens einen Schnittstelle zur Aufnahme von Sensordaten eine Auswerteschaltung auf, wobei die Auswerteschaltung üblicherweise ein Mikrocontroller ist. Es kann sich jedoch auch um einen Mikroprozessor oder um eine ASIC handeln. Weitere Möglichkeiten sind gegeben. Die Ansteuerungsschaltung ist eine Zündkreisschaltung, die in Abhängigkeit von einem Ansteuerungssignal vom Mikrocontroller die Personenschutzmittel, beispielsweise über ein Zündelement, auslöst. Die Schnittstelle und auch die anderen Komponenten des Vorrichtungsanspruchs sind in üblicher Weise in einem Gehäuse eines Steuergeräts angeordnet. Dabei kann die Schnittstelle auch ein Element des Mikrocontroller selbst sein, beispielsweise bei solchen Sensoren, die sich auch innerhalb des Steuergerätsgehäuses befinden.

Die Schnittstelle kann jedoch auch an externe Sensoren angeschlossen sein, die sich außerhalb des Steuergeräts befinden, wie Seitenaufprall, Frontaufprall und Umfeldsensoren.

Ein Computerprogramm wird auf der Auswerteschaltung die, wie oben dargestellt, als Prozessor oder Mikrocontroller ausgebildet ist, laufen. Dies Computerprogramm umfasst dann alle Schritte des Verfahrens. Dies gilt ebenso für das Computerprogrammprodukt, denn das Computerprogramm, was auf dem Mikrocontroller läuft, ist in einem Speicher, beispielsweise einem EEPROM abgespeichert und kann über maschinenlesbare Datenträger, die CDs, DVDs, USB-Sticks, Festplatten gespeichert werden. Insbesondere wird das Programm auf einem Steuergerät zur Ansteuerung von Personenschutzmitteln verwendet

Erfindungsgemäß weist der Trainingsdatensatz mehrere Vektoren auf, denen jeweils Klassen für die Klassifizierung zugeordnet sind. D. h. eine Untermenge von Vektoren der Gesamtmenge der Vektoren gehört zu einer bestimmten Klasse. Der Abstand des Merkmalsvektors bezüglich der Vektoren wird dann bestimmt und der Merkmalsvektor wird dann derart klassifiziert, dass die Klasse gewählt wird, zu der die Mehrheit der k- nächsten Vektoren gehört. Es wird demnach eine Mehrheitsentscheidung gefällt. Entscheidend dabei ist der Parameter k, der derart gewählt wird, dass die Vektoren selbst optimal klassifiziert werden würden. D. h. in einer Applikationsphase wird jeder Vektor des Trainingsdatensatzes klassifiziert. Dabei werden verschiedene Werte für k angenommen. Bei dem k-Wert, bei dem die geringste Abweichung von der optimalen Klassifizierung stattfindet, wird stehen geblieben, um diesen Wert für die Klassifizierung der realen Messwerte zu verwenden.

Es ist möglich, dass für die Klassifizierung ein Mittelwert der Klassen der k-nächsten Vektoren bestimmt wird.

Durch die in den abhängigen Ansprüchen aufgeführten Maßnahmen und Weiterbildungen sind vorteilhafte Verbesserungen des im unabhängigen Patentanspruch angegebenen Verfahrens zur Ansteuerung von Personenschutzmitteln möglich.

Besonders vorteilhaft ist, dass das jeweilige Merkmal aus einem zeitlichen Block vorgegebener Länge eines Merkmalverlaufs ermittelt wird. Es ist demnach a priori festgelegt, wie lang der Block ist, wobei das Merkmal aus dem kontinuierlichen Merkmalsverlauf oder aus dem Merkmalsverlauf am Ende des Blocks ermittelt wird. Beispielsweise wird bei einer Integration über die gesamte Länge der gesamte Signalverlauf verwendet, während wenn der Beschleunigungswert am Ende des Blocks verwendet werden soll, eben nur dieser verwendet wird.

Die Länge des Blocks wird derart vorgegeben, dass sich eine Charakteristik des Merkmalverlaufs nicht ändert. Damit ist eine Phase des Crashverlaufs gemeint, das also nicht verschiedene Phasen in einen Merkmalsvektor eingehen und sich beispielsweise derart kompensieren, dass eine fehlerhafte Entscheidung aus diesem Merkmal gezogen wird.

Weiterhin ist es vorteilhaft, dass der jeweilige Merkmalsverlauf in einem Bildbereich transformiert wird und dort das jeweilige Merkmal im Bildbereich bestimmt wird. Durch eine Transformation, beispielsweise mittels einer Fast-FourierTransformation ist es möglich in den Frequenzbereich, also den Bildbereich zu gehen, um gegebenenfalls eine einfachere Analyse des Signals durchführen zu können, als es im Zeitbereich möglich ist.

Anstatt von Vektoren als Trainingsdaten können jedoch auch nur Klassengrenzen abgespeichert werden und dann der Abstand zu diesen Klassengrenzen bestimmt wird, die dann sogenannte Hyperflächen bilden. Diese Klassengrenzen können geglättet bzw. gefiltert werden. Anstatt nur die Klassengrenzen abzuspeichern ist es auch möglich, die Vektoren des Trainingsdatensatzes abzuspeichern und zu behalten, die an den Grenzen der Klassengrenzen liegen. Solche Vektoren, die sich lediglich in der Mitte eines Gebiets aufhalten, kann man dagegen problemlos streichen.

Ausführungsbeispiele der Erfindung sind in der Zeichnung dargstellt und werden in der nachfolgenden Beschreibung näher erläutert.

Es zeigen:

Figur 1      ein Blockschaltbild der erfindungsgemäßen Vorrichtung,

Figur 2      eine Softwareelementenaufteilung auf dem Mikrocontroller,

Figur 3      ein Flussdiagramm,

Figur 4      ein Beispiel für eine Merkmalsklassifizierung,

Figur 5      ein Beispiel für eine Klassifikation im zweidimensionalen Raum mit zwei unterschiedlichen Klassen,

Figur 6      ein erstes Signalablaufdiagramm,

Figur 7    ein zweites Signalablaufdiagramm und

Figur 8    ein Zeitdiagramm.

Bekanntermaßen wird demnach mittels eines Abstandsmaßes bestimmt, wie der Merkmalsvektor zu klassifizieren ist und damit welche Art von Crash vorliegt oder nicht. Dieses Abstandsmaß kann vorteilhafter Weise durch den Algorithmus des nächsten Nachbarn (k-Nearest Neighbor Algorithmus) bestimmt werden.

Der k-NN Algorithmus gibt eine Methode vor, wie auf der Basis eines Trainingsdatensatzes T mit bekannter vorgegebenen Klassenzugehörigkeit ein unbekanntes Signal einer der vorgegebenen Klassen zugeordnet werden kann. Der k-NN Algorithmus erlaubt also die Klassifikation von gemessenen Signalen.

Dazu wird für jedes Element aus dem Trainingsdatensatz ein Merkmalsvektor $MV_m$ berechnet. Es gilt also für den Trainingsdatensatz T:

$$T= \{MV_1, MV_2, ..., MV_M\},$$

wobei M für die Anzahl der Elemente des Trainingsdatensatzes steht. Jeder einzelne Merkmalsvektor $MV_m$ hat d Dimensionen:

$$MV_m=(MV_{m,1}, MV_{m,2}, ...., MV_{m,d}).$$

Jeder Merkmalsvektor MV aus T bezeichnet demnach einen Punkt in einem d-dimensionalen Raum. Nun existiert eine Klasseneinteilung C für jeden der Merkmalsvektoren des Trainingsdatensatzes mit den Klassen:

$$C= \{C_1, C_2, ..., C_N\},$$

wobei N die Anzahl der Klassen bezeichnet. Es gibt also eine feste Zuordnung

$$MV_m \rightarrow C_n.$$

Nun soll ein unbekannter Merkmalsvektor $MV_u$, mit unbekannter Klassenzugehörigkeit und mit derselben Dimension d und demselben Messverfahren gewonnen wie die Merkmalsvektoren des Trainingsdatensatzes, einer der Klassen aus C zugeordnet werden. $MV_u$ bezeichnet also, ebenso wie die Merkmalsvektoren aus dem Trainingsdatensatz, einen Punkt im d-dimensionalen Raum.

Um die Klassenzugehörigkeit von $MV_u$ zu bestimmen, wird nun ausgezählt, zu welcher Klasse $C_n$ die Mehrheit der k nächsten Merkmalsvektoren der Trainingsdaten gehören. Dieser Klasse wird dann $MV_u$ zugeordnet, wobei
k=1, 2, 3 ...fei wählbar ist.

Zur Bestimmung dieser nächsten Nachbarn wird ein frei wählbares Abstandsmaß verwendet, welches z. B. der euklidische Abstand sein kann. Es sind aber auch alle anderen bekannten Abstandsmaße anwendbar, wie z. B. der Mahalanobis-Abstand.

Falls k=1 gewählt wird, wird also automatisch die Klasse gewählt, zu welcher der allernächste Nachbar zum unbekannten Datenpunkt gehört.

Bei k=3 wird eine Mehrheitsentscheidung getroffen.

Alternativ kann der k-NN Algorithmus auch zur Berechnung einer Regression verwendet werden:

Statt einer Mehrheitsentscheidung wird in diesem Fall ein Mittelwert aus den mit Zahlen bezeichneten Klassen der k nächsten Nachbarn berechnet.

Beschreibung eines k-NN Algorithmus zur Klassifizierung von Crashzuständen

Ein k-NN Algorithmus zur Klassifizierung von Crashzuständen ist folgendermaßen aufgebaut:

In einem ersten Schritt werden Daten von Sensoren aufgenommen und diese Daten optional vorverarbeitet. So kann z. B. ein Beschleunigungssignal ein- oder zweimal integriert werden, um eine Geschwindigkeits- oder Weginformation zu erhalten. Auch andere Merkmals-Vorverarbeitungen sind vorstellbar, wie sie in dieser Beschreibung erwähnt sind.

Im nächsten Schritt werden die Verläufe der Merkmale in mehrere Zeitblöcke (ZB) vorgegebener Länge unterteilt.

Aus Daten innerhalb eines einzelnen Zeitblocks wird dann ein Merkmalsvektor MV berechnet. Die Daten innerhalb des Merkmalsvektors sind sinnvoll ausgewählte Charakterisierende Merkmale des Blockinhalts, also z. B. der Wert des Integrals der Beschleunigung am Blockende, die Varianz des Signals innerhalb eines Blocks, die Differenz zwischen den aufsummierten Werten verschiedener Sensoren, etc.. Es besteht keinerlei Einschränkung bei der Auswahl der Daten. Die Anzahl der verwendeten Daten gibt die Dimension des Merkmalsraums an, in dem klassifiziert wird.

In einer vorab durchgeführten Applikationsphase wird ein Trainingsdatensatz nach genau dem gleichen Schema verarbeitet und die erhaltenen Merkmalsvektoren im Steuergerät abgespeichert. Zusätzlich wird jeder Merkmalsvektor MV des Trainingsdatensatzes noch mit einer Kennzeichnung seiner Klassenzugehörigkeit versehen. Beispielhaft können Klasseneinteilungen folgendermaßen aussehen:

Beispiel 1:

$C_1$ = Nofire Klasse
$C_2$ = Fire Klasse

Beispiel 2:

$C_1$ = Kein Auslöseergebnis
$C_2$ = Crash gegen weiche Barriere
$C_3$ = Crash gegen harte Barriere

Beispiel 3:

$C_1$ = Kein Auslöseergebnis
$C_2$ = symmetrisches Crashereignis
$C_3$ = links-Crash
$C_3$ = rechts-Crash

Beispiel 4:

$C_1$ = Crashschwere 1
$C_2$ = Crashschwere 2
$C_3$ = Crashschwere 3
$C_4$ = Crashschwere 4
$C_5$ = Crashschwere 5
$C_6$ = Crashschwere 6

Beispiel 5:

$C_1$ = Crashgeschwindigkeit zwischen 0km/h und 10km/h
$C_2$ = Crashgeschwindigkeit zwischen 10km/h und 20km/h
$C_3$ = Crashgeschwindigkeit zwischen 20km/h und 30km/h
$C_4$ = Crashgeschwindigkeit zwischen 30km/h und 40km/h
$C_5$ = Crashgeschwindigkeit zwischen 40km/h und 50km/h
$C_6$ = Crashgeschwindigkeit zwischen 50km/h und 60km/h

Insbesondere bei der Einteilung der Klassen wie in Beispiel 4 und 5 kann auch das beschriebene Verfahren einer Regression angewandt werden.

Wichtig ist, dass für jede der vorhandenen Klassen Trainingsdaten vorhanden sind.

Zusätzlich wird noch ein Zahlenwert für den Parameter k im Speicher abgelegt. Ein für die vorhandene Klasseneinteilung und den vorhandenen Trainingsdatensatz optimales k kann beispielsweise nach folgender Rechenvorschrift erhalten werden:

Verfahren LOOCV (Leave one out cross validation):

Hierzu wird jeweils der gesamte Trainingsdatensatz bis auf einen abgespeichert. Der eine verbleibende Datensatz wird nun als unbekannter Datenwert angesehen und klassifiziert und die Klassifizierungsgenauigkeit abgespeichert. Das Verfahren wird nun für alle Trainingsdaten auf diese Weise durchgeführt, ebenso für verschiedene k-Werte. Gewählt wird derjenige k-Wert, welcher über den gesamten Trainingsdatensatz (oder über eine nach anderen Gesichtspunkten ausgewählte Untermenge daraus) das beste Klassifikationsergebnis liefert.

Darüber hinaus muss nun noch ein Abstandsmaß festgelegt werden und im $\mu C$ des Steuergerätes implementiert werden.

Als Abstandsmaß kommt beispielsweise in Frage (hier angegeben für 2 Vektoren $(x_1, x_2, x_3,..., x_l)$ und $(y_1, y_2, y_3,...., y_l)$:

- Euklidisches Abstandsmaß ($L_2$-Norm) :

$$\sqrt{\sum_{j=1}^{l} (x_j - y_j)^2}$$

- Allgemeine n-Norm ($p_n$): $\left( \sum_{j=1}^{l} (x_j - y_j)^p \right)$

- Andere Normen (z. B. Mahalanobis, city-block, Chebychev, etc.,...) mit anderer Abstandsgewichtung sind ebenso anwendbar.

Zu beachten ist, dass ein Abstandsmaß auch anisotrop bezüglich der Richtung sein kann. Im Falle des euklidischen Abstandsmaßes würde dies zu

$$\sqrt{\sum_{j=1}^{l} (x_j - y_j)^2} \quad ,$$

wobei aj der Skalierungsfaktor für die Dimension j ist, führen.

Analoges ist auch für die anderen Maße durchführbar.

Im Normalbetrieb werden von allen im Fahrzeug zu diesem Zweck verbauten Sensoren Daten aufgenommen und bei Eintreten eines Ereignisses entsprechend dem angegebenen Verfahren in Zeitblöcke und Merkmalsvektoren transformiert. Nun wird über die Anwendung des gewählten Abstandsmaßes die Klassen der k nächsten Nachbarn aus den hinterlegten Merkmalsvektoren des Trainingsdatensatzes bestimmt. Das Ergebnis wird der Klasse zugeordnet, welcher die Mehrheit des Nachbarn angehört.

Die beschriebene Art der Trennung der Merkmalsvorverarbeitung vom Klassifizierungsalgorithmus bietet eine wesentliche höhere Flexibilität im Hinblick auf Anwendung unterschiedlicher Sensorkonzepte als bisherige Konzepte. So ist die physikalische Bedeutung oder die Zuordnung der Daten innerhalb eines Merkmalsvektors zu einem bestimmten Sensor für den Klassifizierungsalgorithmus ohne Bedeutung. Der Merkmalsvektor kann z.B. an der Stelle $MV_x$ Daten enthalten, die aus einer Messung mit einem Drucksensor hervorgegangen sind, während er an der Stelle $MV_y$ Daten eines Beschleunigungssensors oder eines ganz anderen Messprinzips enthalten kann. Falls man hier ein Messprinzip verändert, muss lediglich die Vorverarbeitung der Daten an den Sensor angepasst werden. Der eigentliche k-NN Klassifizierer ist unabhängig von der inhaltlichen Bedeutung der Daten und muss deswegen nicht verändert werden.

Alternative Umsetzungen:

Das Abspeichern aller Merkmalsvektoren des Trainingsdatensatzes ist nicht immer sinnvoll. Einerseits ist der Speicherbedarf dafür unter Umständen recht hoch, andererseits liefern viele dieser Merkmalsvektoren keinen signifikanten zusätzlichen Beitrag zur Klassifikation.

Deswegen ist es möglich:

Die Merkmalsvektoren des Trainingsdatensatzes einer Vorauswahl zu unterziehen, so dass nur noch diejenigen Merkmalsvektoren abgespeichert werden, die einen signifikanten Beitrag zur Klassifikation leisten. Also z. B. solche, die in der Nähe der Grenze einer Klasse zu einer anderen liegen. Auf Merkmalsvektoren in der Mitte einer Klasse kann verzichtet werden.

Alternativ ist es auch möglich, statt der Merkmalsvektoren des Trainingsdatensatzes direkt die dadurch definierten Klassengrenzen abzuspeichern. Diese müssen in einem zusätzlichen Vorverarbeitungsschritt berechnet werden. Dies kann folgendermaßen geschehen:

Der Raum der Dimension d der Merkmalsvektoren wird in ein Punktraster mit angemessener Auflösung eingeteilt. Für jeden dieser Rasterpunkte wird der k-NN Algorithmus angewendet. Die erhaltene Klassifizierung wird dem Rasterpunkt zugeordnet. Nach Abschluss dieses Arbeitsschrittes ist jedem Rasterpunkt innerhalb dieses d-dimensionalen Raumes eine Klasse zugeordnet. Klassengrenzen bilden nun d-dimensionale Hyperflächen in diesem Raum. Diese können mittels einer geeigneten Parametrisierung im Speicher des Steuergerätes abgelegt werden. In der Anwendung des Algorithmus muss dann nur noch die Lage des durch Messung bestimmten Merkmalsvektors in Bezug auf diese Hyperflächen bestimmt werden. Dies kann z. B. durch einen der bekannten Such- oder Sortieralgorithmus geschehen (binäre Suche, baumartige Suche, etc...), wie sie z.B. in "Donald E. Knuth; The Art of Computer Programing; Vol. I-N" beschrieben sind.

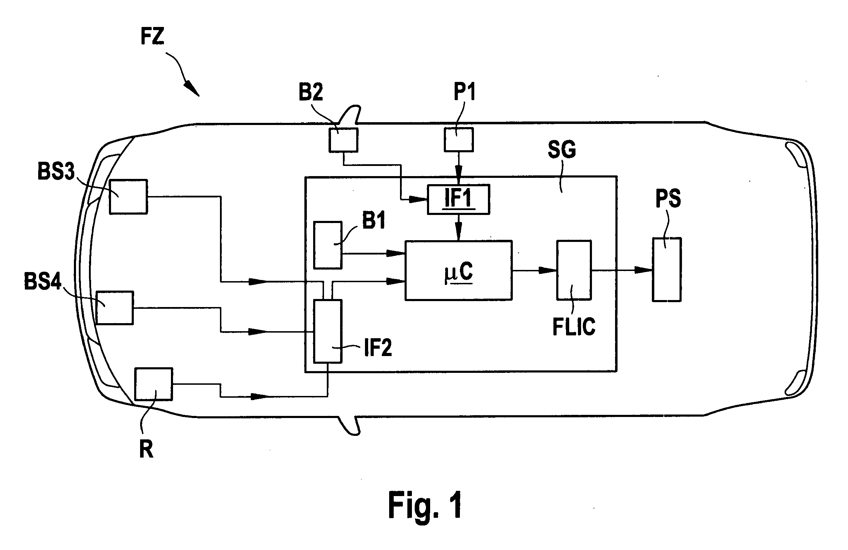

Figur 1 zeigt ein Blockschaltbild mit der erfindungsgemäßen Vorrichtung. Ein Steuergerät SG zur Ansteuerung von Personenschutzmitteln PS ist zentral im Fahrzeug FZ angeordnet. Anstatt einer zentralen Anordnung ist auch eine andere Anordnung möglich, sofern kinematische Sensoren nicht mehr im Steuergerät angeordnet sind. Als Personenschutzmittel werden Airbags, Gurtstraffer, Überrollbügel, crashaktive Kopfstützen und auch Außenairbags sowie eine anhebbare Fronthaube und andere bekannte Personenschutzmittel verstanden. Das Steuergerät SG weist als zentrales Element den Mikrocontroller μC auf. Der Mikrocontroller μC erhält Sensordaten über die Schnittstellen IF1 und IF2, die als ASICs ausgebildet sind. Andere Verkörperungen auch als Softwareelement sind möglich.

An die Schnittstelle IF1 ist der Beschleunigungssensor B2 und der Drucksensor P1 angeschlossen. Diese befinden sich in der Fahrzeugseite. Der Einfachheit halber ist hier nur ein Paar angeordnet und nicht auch das gegenüberliegende Paar. An die Schnittstelle IF2 sind die Beschleunigungssensoren BS3 und BS4 sowie der Radarsensor R angeschlossen. Ein Beschleunigungssensor B1 innerhalb des Steuergeräts SG ist an den Mikrocontroller μC angeschlossen. Dabei ist die Schnittstelle entweder im Mikrocontroller μC enthalten oder bereits im Beschleunigungssensor B1. Der Mikrocontroller μC sendet ein Signal an die Ansteuerungsschaltung FLIC. Diese steuert in Abhängigkeit von einem Ansteuerungssignal des Mikrocontrollers μC die Personenschutzmittel PS an. Die Kommunikation innerhalb des Steuergeräts SG läuft vorwiegend über den sogenannten SPI (Serial Peripherial Interface)-Bus ab. Weitere hier nicht dargestellte Sensoren wie auch Sitzbelegungssensoren, andere Umfeldsensoren wie Ultraschall oder Video oder Lidar, weitere Aufprallsensoren und auch Fahrdynamiksensoren können noch zusätzlich vorgesehen sein, um ihre Signale an den Mikrocontroller μC zu liefern. Das Steuergerät SG weist weitere für seinen Betrieb notwendige aber für das Verständnis der Erfindung nicht essentielle Bauelemente auf. Diese sind deshalb der Einfachheit halber weggelassen worden.

Erfindungsgemäß formt der Mikrocontroller μC aus den Signalen der Unfallsensorik einen Merkmalsvektor und vergleicht diesen über ein Abstandsmaß mit Trainingsdaten. Damit ist dann eine Klassifizierung des Merkmalsvektors möglich und in Abhängigkeit von dieser Klassifizierung weiß dann der Mikrocontroller μC, ob es

sich um einen Auslösefall handelt oder nicht und wenn ja, welche Personenschutzmittel dabei anzusteuern sind. Diese Zuordnung bei den Trainingsdaten ist dann bereits in der Applikationsphase, also vor dem Betrieb des Steuergeräts, für das jeweilige Fahrzeug geschehen.

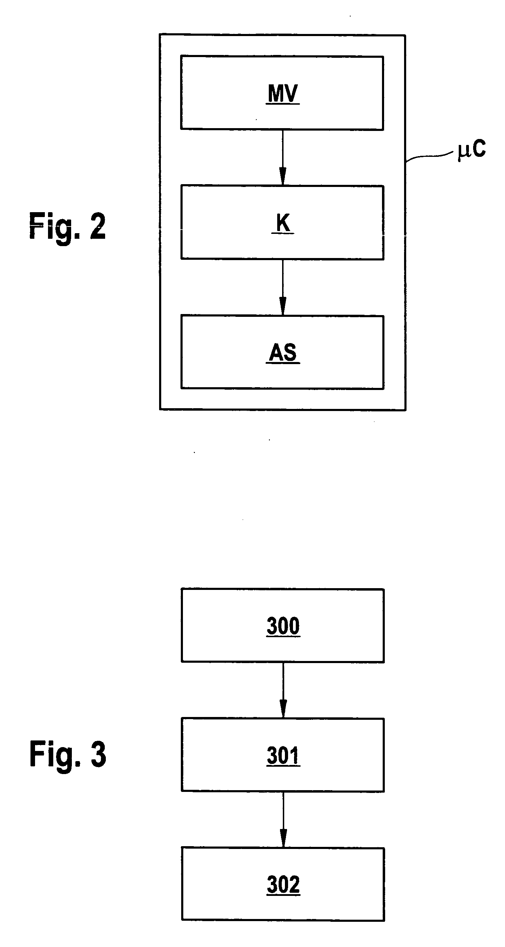

Figur 2 visualisiert unterschiedliche Softwareelemente, die auf dem Mikrocontroller μC angeordnet sind. Dabei ist zunächst das Softwaremodul MV zu sehen, dass der Merkmalsvektor bildet, dann das Softwaremodul K, das die Klassifizierung durchführt und das Softwaremodul AS, das das Ansteuerungssignal erzeugt.

Figur 3 zeigt in einem Flussdiagramm den erfindungsgemäßen Verfahrensablauf. In Verfahrensschritt 300 wird der Merkmalsvektor aus dem Signal der Unfallsensorik erzeugt. Mit diesem Merkmalsvektor wird dann in Verfahrensschritt 301 eine Klassifizierung durchgeführt, in dem ein Vergleich mit Trainingsdaten anhand eines Abstandsmaßes durchgeführt wird. Dabei wird dann die Klassifizierung derart durchgeführt, dass die Trainingsdaten, die zum geringsten Abstand führen, die Klassifizierung bestimmen. In Verfahrensschritt 302 wird dann in Abhängigkeit von dieser Klassifizierung ein Ansteuerungssignal erzeugt. Es kann jedoch auch geschehen, dass wenn die Klassifizierung ergibt, dass ein Nichtauslösefall vorliegt, dass dann keine Auslösung erfolgt.

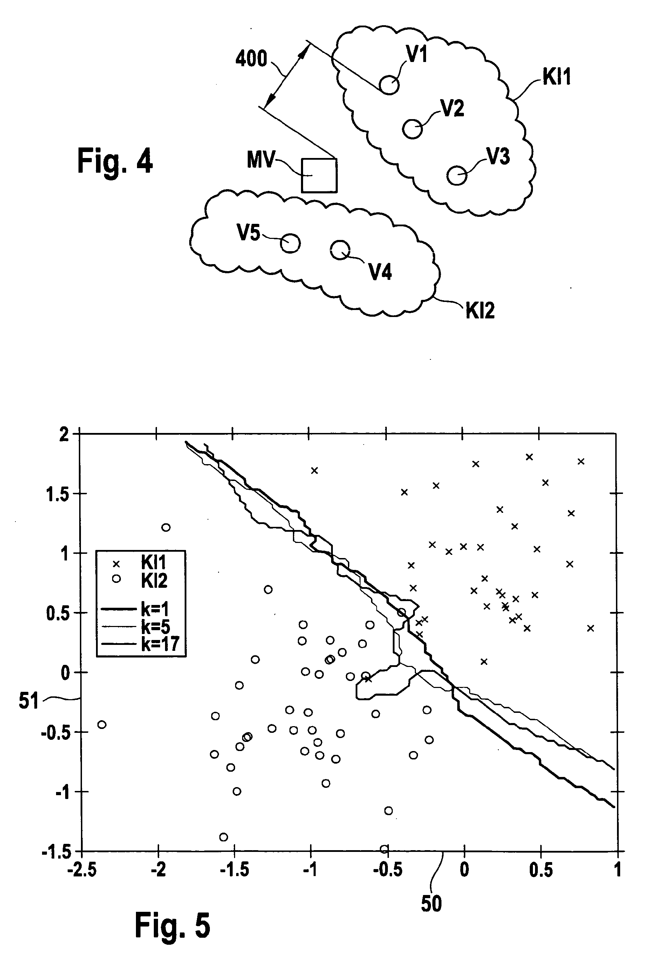

Figur 4 zeigt in einem einfachen zweidimensionalen Beispiel die Klassifizierung. Der Merkmalsvektor MV wird durch das Quadrat dargestellt, das seinen Punkt im entsprechend dimensionalen Raum darstellt. Die Vektoren V1, V2 und V3 gehören zur Klasse KI1, während die Vektoren V4 und V5 die Klasse KI2 bilden. Nun sind verschiedene Möglichkeiten gegeben, um die Klassifizierung durchzuführen. Eine Möglichkeit ist, den Vektor als klassifizierend bestimmend auszuwählen, der den geringsten Abstand zum Merkmalsvektor MV aufweist. Weiterhin ist es möglich, eine Anzahl der nächstliegenden Vektoren vorzugeben, beispielsweise 5 und dann die Mehrheit entscheiden zu lassen, welche Klasse vorliegt, in diesem Fall die Klasse 1, da sie drei Vektoren einbringt, während die Klasse 2 nur zwei Vektoren einbringt, also die Mehrheit für die Klasse 1 spricht. Eine weitere Möglichkeit ist, den Abstand zu den Klassengrenzen zu nehmen und dann den geringsten Abstand auszuwählen. Eine weitere Möglichkeit ist, eine Mittelwertbildung der Klassifizierung durchzuführen, um dann dies zu verknüpfen mit einer entsprechenden Klasse, die zum Ansteuerungssignal führt. D. h. wenn hier alle fünf Vektoren gemittelt werden würde, würde im Verhältnis von 60 zu 40 die Klasse 1 und die Klasse 2 gemittelt. Beispielhaft ist hier durch den Abstand 400 ein Abstandsmaß angegeben. Wie oben angegeben gibt es verschiedene Abstandsbestimmungsverfahren, die alternativ verwendet werden können.

Figur 5 zeigt ein Beispiel für eine Klassifikation im zweidimensionalen Raum mit zwei unterschiedlichen Klassen. KI1 ist durch die Kreuze dargestellt und KI2 durch die Kreise. Für eine Trainingsdatenmenge wurden Merkmalsvektoren eingezeichnet und entsprechend ihrer bekannten Klassenzugehörigkeit gekennzeichnet. Entsprechend den Ausführungen sind die Klassengrenzen beispielhaft für verschiedene k-Werte eingezeichnet, hier die k-Werte 1, 5 und 17. Wie zu erkennen ist, nimmt die direkte Abhängigkeit von einzelnen Trainingsdatenvektoren für größere k ab.

Gegebenenfalls kann die Hyperfläche durch Glättung noch weiter vereinfacht werden, so dass der Speicherbedarf für die Implementierung noch weiter reduziert wird. Auf der Abszisse 50 ist das Merkmal M1 und auf der Ordinate 51 das Merkmal M2 des Merkmalsvektors aufgetragen.

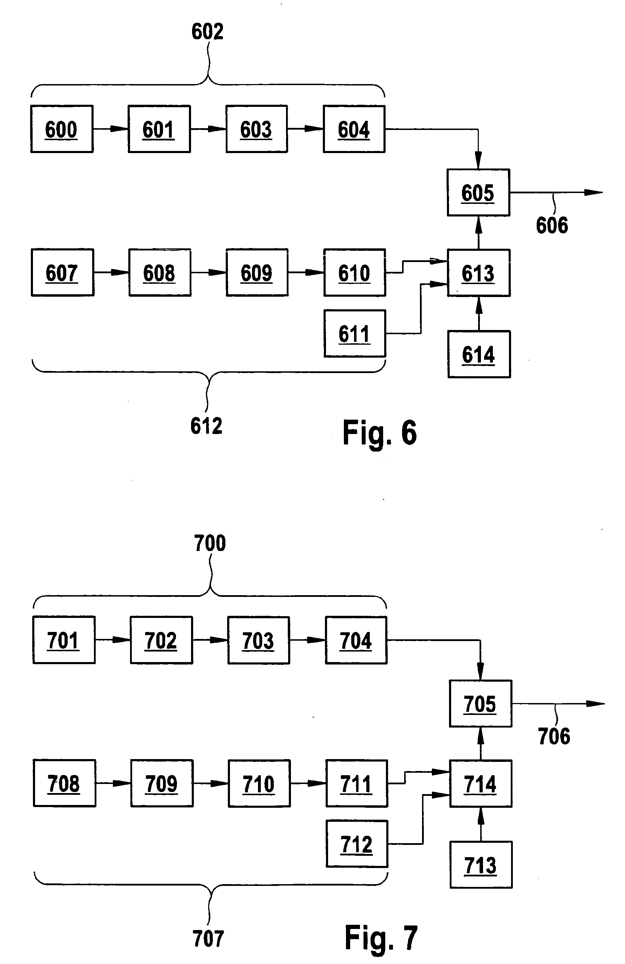

Figur 6 erläutert in einem Signalablaufdiagramm die Funktionsweise der erfindungsgemäßen Vorrichtung bzw. den Ablauf des erfindungsgemäßen Verfahrens. Im oberen Zweig 602 wird die Messwertverarbeitung von aktuellen Messwerten des Steuergeräts im Betrieb im Fahrzeug dargestellt. Im unteren Zweig 612 wird die Vorverarbeitung der Trainingsdaten in der Applikationsphase dargestellt. Dies geschieht bevor die Steuergeräte verkauft werden. In Verfahrensschritt 600 erzeugen die Unfallsensoren, die zur Unfallsensorik gehören, die Signale 1 bis N. In Verfahrensschritt 601 geschieht eine Vorverarbeitung wie eine Filterung, eine Integration, eine zweifache Integration oder andere Verfahrensschritte. Auch eine Mittelwertbildung gehört dazu. In Verfahrensschritt 603 werden die Blöcke zeitlich gebildet, dabei wird die zeitliche Länge des Blocks so gewählt, dass sich die charakteristischen Merkmale des Merkmalsverlaufs nicht verändern. Aus den Merkmalen, die durch die Blockbildung gewonnen werden, wird in Verfahrensschritt 604 dann der Merkmalsvektor bestimmt. In Verfahrensschritt 605 wird der Merkmalsvektor dem Algorithmus zugeführt, der die nächsten Nachbarn bestimmt und dabei die Trainingsdaten verwendet. Das Klassifikationsresuitat 606 wird dann weitergegeben um zu entscheiden, ob die Ansteuerungsschaltung angesteuert werden soll. Die Verarbeitung der Trainingsdaten beginnt auch in Verfahrensschritt 607 mit einer Erzeugung von Sensorwerten 1 bis N. In Verfahrensschritt 608 geschieht ebenfalls eine entsprechende Vorverarbeitung. Auch hier wird in Verfahrensschritt 609 eine Blockbildung durchgeführt. Daraus werden dann in Verfahrensschritt 610 die Trainingsvektoren bestimmt. Dies wird mit den Klasseinformationen 611 im Speicher 613 in der Applikationsphase verknüpft, damit man weiß, welche Trainingsvektoren welche Crashsituationen abbilden. Zusätzlich wird in Verfahrensschritt 614 appliziert, welches Abstandsmaß genommen wird und welchen Wert k einnehmen soll.

Wie man sieht werden die Trainingsdaten genauso verarbeitet wie die aktuell aufgenommenen Sensormesswerte. Die so erhaltenen Merkmalsvektoren werden im Speicher des Steuergeräts abgelegt. Zusätzlich wird noch diesen Trainingsmerkmalsvektoren zugeordnete Klasseinformationen mit abgespeichert. Anhand dieser Informationen mit einem bestimmten Wert für k wird dann durch den k-NN-Algorithmus die Klassifizierung der Onlinemerkmalsvektoren durchgeführt.

Figur 7 zeigt eine konkrete Anwendung des erfindungsgemäßen Verfahrens. Auch hier sind dargestellt die Messwertverarbeitung 700, die die aktuellen Messwerte betrifft und die Verarbeitung der Trainingsdaten 707, die im Vorfeld geschieht. In Verfahrensschritt 701 werden als Sensorwerte im Steuergerät die Beschleunigung in Fahrzeuglängsrichtung und durch sogenannte Upfrontsensoren die im Bereich des Stoßfängers angeordnet sind, ebenfalls Beschleunigungswerte aufgenommen. In Verfahrensschritt 702 erfolgt als Vorverarbeitung die Integration. In Verfahrensschritt 703 erfolgt die Blockbildung mit einer Blocklänge von 10ms. In Verfahrensschritt 704 werden dann die integrierten Beschleunigungen im Merkmalsvektor angeordnet, so dass hier ein dreidimensionaler Merkmalsvektor vorliegt. Dieser Vektor wird dann in Verfahrensschritt 705 dem Algorithmus zugeführt, um dann in Verfahrensschritt 706 die Klassifizierung weiterzugeben. Die Trainingsdaten werden ebenfalls in Verfahrensschritt 708 mit Sensorwerten wie die aktuellen Messwerte trainiert. Dabei sind allerdings die einzelnen Messwerte bereits charakterisiert, so dass die unterschiedlichen Aufprallarten diesen letztlich dann entstehenden Trainingsvektoren zugeordnet werden. Dazu gehören auch sogenannte Misuse-Fälle, also solche Fälle, bei denen keine Auslösung notwendig ist aber auch die anderen Fälle wie ein AZT-Crash, verschiedene Crasharten mit verschiedenen Geschwindigkeiten gegen starre Barrieren oder gegen deformierbare Barrieren und andere sind hier angegeben. In Verfahrensschritt 709 werden dann die Sensorsignale ebenfalls integriert und in Verfahrensschritt 710 erfolgt die Blockbildung, hier allerdings mit zwei verschiedenen Zeiten, und zwar von 0 bis 10 ms und von 8 bis 15 ms.

In Verfahrensschritt 711 liegt dann der Trainingsvektor vor. Der Trainingsvektor wird dann mit den Klassen aus 712 im Speicher 714 verknüpft. Dazu kommt noch der Wert für k, der hier in Verfahrensschritt 713 mit k = 5 festgelegt ist, so dass dann alles im Speicher 714 für den Algorithmus 705 vorliegt.

Wie in 704 dargestellt werden hier die Maximalwerte aus der Blockbildung für den Vektor genommen, also nicht eine Summe des Merkmalsverlaufs, sondern die Maximalwerte. Dies gilt dann auch für die Trainingsvektoren in Verfahrensschritt 711. Mit Hilfe des euklidischen Abstandsmaßes und des Parameters k = 5 wird dann die Klassifikation des Messwerts durch den Algorithmus ausgeführt. Das Ergebnis ist die Information, ob ein Ereignis einer Ansteuerung oder einer Nichtansteuerung bedingt. Damit kann dann ein beliebiges Personenschutzmittel angesteuert werden.

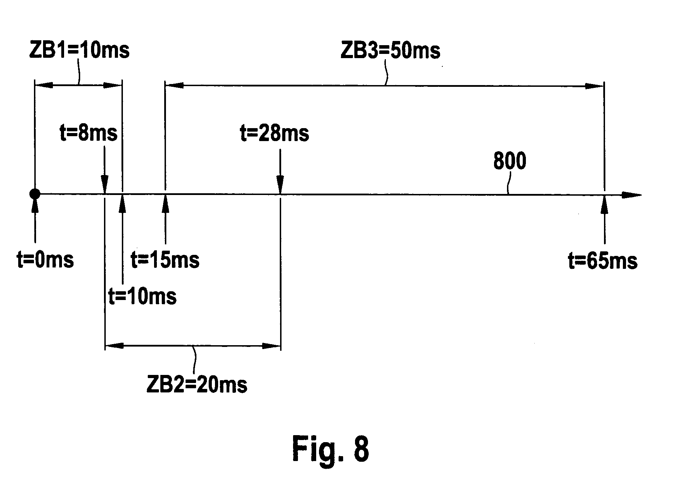

Figur 8 zeigt ein Zeitdiagramm mit der Zeitachse 800. Die Länge der Blöcke sollte so gewählt sein, dass innerhalb eines Blocks die Charakteristik des Merkmalsverlaufs sich nicht ändert. Dies verbessert die Anpassung der Modellparameter an den beobachteten Merkmalsverlauf. Da die Grenzen der Blöcke, abhängig vom Klassifizierungsziel unterschiedlich sein können, ist hier vom Applikateur eine optimale Einstellung der Blocklängen zu suchen. Dabei kann es auch vorteilhaft sein, die einzelnen Blöcke unterschiedlich lang und überlappend zu wählen. Fig. 8 zeigt ein Beispiel für die Wahl von drei Zeitblöcken.

Wie bereits erwähnt, gibt es eine an sich unbegrenzte Anzahl an Methoden zur Merkmalsvorverarbeitung und zur Gewinnung eines Merkmalsvektors. Folgende Methoden können z. B. angewendet werden:

Jede Variante transformiert den eingangsseitig vorliegenden Merkmalsverlauf in einen Bildbereich. Für die ersten beiden Varianten V1, V2 ist das ein Satz von Parametern mit dem der Merkmalsverlauf am Eingang durch das Modell angenähert werden kann. Zur Bestimmung der Parameter bedient man sich den Algorithmen aus der Theorie von Wiener Filtern (V1) bzw. Polynomregression (V2). Bei V3 wird der ZB vom Zeitbereich in den Frequenzbereich transformiert. Vorzugsweise benutzt man ein Verfahren zur Abschätzung des Leistungsdichtespektrums, welches die Anteile an Signalleistung pro Frequenz wiedergibt und damit unabhängig von Phasenverschiebung im Merkmalsverlauf ist. Durch die Diskrete Wavelet Transformation wird, ähnlich zu V3, bei V4 der ZB am Eingang in zeit- und frequenzabhängige Anteile zerlegt.

Hier können sogenannte Editing/Condensing Methoden, wie sie in der Literatur beschrieben sind, angewendet werden. Im Prinzip geht es darum, dass das Verfahren iterativ solche Datenpunkte identifiziert und eliminiert, die sehr wahrscheinlich zu Fehlklassifikationen führen. Dabei wird ein Bruchteil des Trainingsdatensatzes zu Testdaten. Daten, die im Testverlauf mit dem kNN auf reduziertem Trainingsdatensatz Fehler liefern, werden entfernt. Der Vorgang wird mehrmalig durchgeführt.

**Patentansprüche**

1. Verfahren zur Ansteuerung von Personenschutzmitteln (PS) mit folgenden Verfahrensschritten:

   - aus wenigstens einem Signal einer Unfallsensorik (P, BS, R) wird eine Mehrzahl von Merkmalen erzeugt und diese Mehrzahl der Merkmale wird in einem Merkmalsvektor (MV) zusammengefasst,
   - der Merkmalsvektor (MV) wird mittels eines Abstandsmaßes mit einem Trainingsdatensatz verglichen, wobei eine Klassifizierung des Merkmalsvektors (MV) in Abhängigkeit von diesem Vergleich erfolgt,
   - ein Ansteuerungssignal zur Ansteuerung der Personenschutzmittel (PS) wird in Abhängigkeit von der Klassifizierung erzeugt, **dadurch gekennzeichnet, dass** der Trainingsdatensatz mehrere Vektoren aufweist, die jeweils Klassen für die Klassifizierung zugeordnet sind, wobei der Abstand des Merkmalsvektors bezüglich der Vektoren bestimmt wird und der Merkmalsvektor derart klassifiziert wird, dass die Klasse gewählt wird, zu der die Mehrheit der k nächsten Vektoren gehört oder dass der Merkmalsvektor MV derart klassifiziert wird, dass für die Klassifizierung ein Mittelwert der Klassen der k nächsten Vektoren bestimmt wird, wobei die Vektoren aus dem Trainingsdatensatz stammen.

2. Verfahren nach Anspruch 1, **dadurch gekennzeichnet, dass** das jeweilige Merkmal aus einem zeitlichen Block vorgegebener Länge eines Merkmalverlaufs ermittelt wird.

3. Verfahren nach Anspruch 2, **dadurch gekennzeichnet, dass** das jeweilige Merkmal aus dem kontinuierlichen Merkmalsverlauf oder aus dem Merkmalsverlauf am Ende des Blocks ermittelt wird.

4. Verfahren nach Anspruch 2 oder 3, **dadurch gekennzeichnet, dass** die Länge derart vorgegeben wird, dass sich eine Charakteristik des Merkmalsverlaufs nicht ändert.

5. Verfahren nach einem der Ansprüche 2 bis 4, **dadurch gekennzeichnet, dass** der jeweilige Merkmalsverlauf in einen Bildbereich transformiert wird und dass das jeweilige Merkmal im Bildbereich bestimmt wird.

6. Verfahren nach Anspruch 1, **dadurch gekennzeichnet, dass** der Wert k derart gewählt wird, dass die Vektoren selbst optimal klassifiziert werden.

**Claims**

1. Method for activating vehicle occupant protection means (PS) having the following method steps:

- a multiplicity of features is generated from at least one signal of an accident sensor system (P, BS, R), and this multiplicity of features is combined in a feature vector (MV),
- the feature vector (MV) is compared with a training data record by means of a distance measure, wherein a classification of the feature vector (MV) is carried out as a function of this comparison,
- an actuation signal for actuating vehicle occupant protection means (PS) is generated as a function of the classification, **characterized in that** the training data record has a plurality of vectors which are each assigned to classes for the classification, wherein the distance of the feature vector from the vectors is determined, and the feature vector is classified in such a way that the class to which the majority of the k-next vectors belongs is selected, or that the feature vector MV is classified in such a way that a mean value of the classes of the k-next vectors is determined for the classification, wherein the vectors originate from the training data record.

2. Method according to Claim 1, **characterized in that** the respective feature is determined from a chronological block of predefined length of a feature profile.

3. Method according to Claim 2, **characterized in that** the respective feature is determined from the continuous feature profile or from the feature profile at the end of the block.

4. Method according to Claim 2 or 3, **characterized in that** the length is predefined in such a way that a characteristic of the feature profile does not change.

5. Method according to one of Claims 2 to 4, **characterized in that** the respective feature profile is transformed into an image area, and **in that** the respective feature in the image area is determined.

6. Method according to Claim 1, **characterized in that** the value k is selected in such a way that the vectors themselves are classified in an optimum way.

**Revendications**

1. Procédé d'activation de moyens (PS) de protection de personnes, qui présente les étapes suivantes :

- plusieurs caractéristiques sont formées à partir d'au moins un signal d'un ensemble de détecteurs d'accident (P, BS, R) et ces différentes caractéristiques sont rassemblées en un vecteur caractéristique (MV),
- le vecteur caractéristique (MV) est comparé par mesure de distance à un jeu de données d'apprentissage, une classification du vecteur caractéristique (MV) ayant lieu en fonction de cette comparaison,
- un signal d'activation qui active les moyens (PS) de protection des personnes est formé en fonction de la classification,
**caractérisé en ce que**
le jeu de données d'apprentissage présente plusieurs vecteurs qui sont tous associés à des classes en vue de la classification,
**en ce que** la distance entre le vecteur caractéristique et les vecteurs est déterminée et le vecteur caractéristique est classé en sélectionnant la classe à laquelle la majorité des k vecteurs les plus proches appartient ou

**en ce que** le vecteur caractéristique MV est classé en déterminant pour la classification une valeur moyenne des classes des k vecteurs les plus proches, les vecteurs provenant du jeu de données d'apprentissage.

2. Procédé selon la revendication 1, **caractérisé en ce que** chaque caractéristique est déterminée à partir d'un bloc temporel de longueur prédéterminée de l'évolution d'une caractéristique.

3. Procédé selon la revendication 2, **caractérisé en ce que** chaque caractéristique est déterminée à partir de l'évolution continue de la caractéristique ou de l'évolution de la caractéristique à la fin du bloc.

4. Procédé selon les revendications 2 ou 3, **caractérisé en ce que** la longueur est prédéterminée de telle sorte qu'une caractéristique de l'évolution de la caractéristique ne se modifie pas.

5. Procédé selon l'une des revendications 2 à 4, **caractérisé en ce que** chaque évolution de caractéristique est transformée en un domaine d'image et **en ce que** la caractéristique concernée est déterminée dans le domaine d'image.

6. Procédé selon la revendication 1, **caractérisé en ce que** la valeur k est sélectionnée de telle sorte que les vecteurs soient classés d'eux-mêmes de manière optimale.

Fig. 1

**Fig. 2**

**Fig. 3**

Fig. 4

Fig. 5

602

```
┌─────┐   ┌─────┐   ┌─────┐   ┌─────┐
│ 600 │──▶│ 601 │──▶│ 603 │──▶│ 604 │───────┐
└─────┘   └─────┘   └─────┘   └─────┘       │
                                            ▼
                                        ┌─────┐
                                        │ 605 │──────▶
                                        └─────┘      606
                                            ▲
┌─────┐   ┌─────┐   ┌─────┐   ┌─────┐       │
│ 607 │──▶│ 608 │──▶│ 609 │──▶│ 610 │──┐  ┌─────┐
└─────┘   └─────┘   └─────┘   └─────┘  └─▶│ 613 │
                                       ┌─▶└─────┘
                              ┌─────┐  │    ▲
                              │ 611 │──┘    │
                              └─────┘    ┌─────┐
                                         │ 614 │
                                         └─────┘
```

612

**Fig. 6**

700

```
┌─────┐   ┌─────┐   ┌─────┐   ┌─────┐
│ 701 │──▶│ 702 │──▶│ 703 │──▶│ 704 │───────┐
└─────┘   └─────┘   └─────┘   └─────┘       │
                                            ▼
                                        ┌─────┐
                                        │ 705 │──────▶
                                        └─────┘      706
                                            ▲
┌─────┐   ┌─────┐   ┌─────┐   ┌─────┐       │
│ 708 │──▶│ 709 │──▶│ 710 │──▶│ 711 │──┐  ┌─────┐
└─────┘   └─────┘   └─────┘   └─────┘  └─▶│ 714 │
                                       ┌─▶└─────┘
                              ┌─────┐  │    ▲
                              │ 712 │──┘    │
                              └─────┘    ┌─────┐
                                         │ 713 │
                                         └─────┘
```

707

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10360893 A1
- US 5983147 A
- US 6173224 B1